# EUROPÄISCHE PATENTSCHRIFT

(11) **EP 3 380 741 B1**
(45) Veröffentlichungstag und Bekanntmachung des Hinweises auf die Patenterteilung: **08.01.2020**
(21) Anmeldenummer: 16797877.4
(22) Anmeldetag: 16.11.2016
(51) Int. Cl.: F16D 48/08

(54) **VERFAHREN ZUR STEUERUNG DER KUPPLUNG EINES KRAFTFAHRZEUGES**
METHOD FOR CONTROLLING THE CLUTCH OF A MOTOR VEHICLE
PROCÉDÉ DE COMMANDE DE L'EMBRAYAGE D'UN VÉHICULE AUTOMOBILE

(30) Priorität: 25.11.2015 DE 102015223266
(43) Veröffentlichungstag der Anmeldung: 03.10.2018
(73) Patentinhaber: Volkswagen Aktiengesellschaft, 38440 Wolfsburg (DE)
(72) Erfinder: FOREJTEK, Martin, 50346 Trebechovicce pod Prebem (CZ); KALMS, Rene, 38110 Braunschweig (DE)
(86) Internationale Anmeldenummer: PCT/EP2016/077872
(87) Internationale Veröffentlichungsnummer: WO 2017/089200

(56) Entgegenhaltungen:
- EP-A1- 2 894 316
- EP-A2- 2 497 940
- WO-A1-2006/119918
- WO-A2-2015/014614
- DE-A1- 19 524 412

## Beschreibung

Die Erfindung betrifft ein Verfahren gemäß den Merkmalen des Oberbegriffs des Patentanspruches 1.

Ein Kraftfahrzeug weist im Allgemeinen einen Verbrennungsmotor, ein Getriebe und eine Kupplung auf, wobei die Kupplung zur Übertragung eines Drehmomentes wirksam zwischen dem Verbrennungsmotor und dem Getriebe vorgesehen und/oder angeordnet ist. Mit Hilfe der Kupplung ist eine Ausgangswelle des Verbrennungsmotors mit einer Getriebeeingangswelle des Getriebes zur Übertragung eines Drehmomentes koppelbar. Wenn bei einem Segelbetrieb des Kraftfahrzeuges, also dann, wenn das Kraftfahrzeug mit ausgeschaltetem Verbrennungsmotor und mit zumindest teilweise, insbesondere vollständig geöffneter Kupplung antriebsfrei rollt, der Verbrennungsmotor angeschleppt bzw. gestartet werden soll, wird die Kupplung zum Start des Verbrennungsmotors bzw. zum Anschleppen des Verbrennungsmotors geschlossen. Die Getriebeausgangswelle ist mit den Antriebsrädern des Kraftfahrzeugs wirksam verbunden bzw. ist mit den Antriebsrädern eines Kraftfahrzeuges wirksam gekoppelt, wobei im Getriebe selbst insbesondere auch eine Gangstufe eingelegt ist. Wird die Kupplung dann zum Anschleppen bzw. zum Start des Verbrennungsmotors geschlossen, wird daher die träge Masse des rollenden Kraftfahrzeuges genutzt, um insbesondere einen komfortablen Verbrennungsmotorstart über eine steuerbare Kupplung zu realisieren. Hierbei wird dann von den Antriebsrädern über das Getriebe, insbesondere über die Getriebeeingangswelle und die zumindest teilweise geschlossene Kupplung ein Drehmoment auf die Ausgangswelle des Verbrennungsmotors übertragen, um diese anzutreiben bzw. den Verbrennungsmotor zu starten.

Im Stand der Technik sind nun unterschiedliche Verfahren bzw. unterschiedlich ansteuerbare Kupplungen zum Anschleppen bzw. zum Starten eines Verbrennungsmotors bekannt. Insbesondere wird dann bei einer steuerbaren Kupplung ein Kupplungs-Sollmoment und/oder ein Verlauf eines Kupplungs-Sollmomentes vorgegeben, woraufhin sich ein jeweiliges Kupplungs-Istmoment oder ein Verlauf eines Kupplungs-Istmomentes einstellt. Ein entscheidender Bereich/eine entscheidende Phase ist der Anlegepunkt der zu schließenden Kupplung. Insbesondere dieser Bereich/Zeitpunkt ist auch mitentscheidend für den Komfort, den der Fahrer des Kraftfahrzeugs empfindet, da zu diesem Zeitpunkt/in dieser Phase eine Aggregateverlagerung der Aggregate des Kraftfahrzeugs stattfindet. Bis zum Anlegepunkt der Kupplung wird durch den Verlauf des Kupplungs-Sollmomentes der jeweilige Verlauf des Kupplungs-Istmomentes vorgegeben bzw. realisiert, wobei im Anlegepunkt der Kupplung aufgrund des dann realisierten Kupplungs-Istmomentes von der Getriebeseite der Kupplung auf die Verbrennungsseite der Kupplung ein bestimmtes Kupplungsmoment übertragen wird, wodurch es dann aber zu einer Aggregateverlagerung (Aggregate sind insbesondere der Motor und das Getriebe) des Kraftfahrzeugs kommt und sich die Aggregate ab dem Anlegepunkt der Kupplung, in einem zunehmendem Maße in den zugeordneten Gummi-Aggregatelager abstützen müssen. Insbesondere wird dann ein Gegenmoment zum Kupplungsmoment (Aktion gleich Reaktion) aufgebaut. Hierbei ist es für den Komfort auch entscheidend, wie sich das Aggregat in dem Gummi-Aggregatlager abstützt bzw. wie nun das abstützende Moment in den Gummi-Aggregatelagern dann aufgebaut wird.

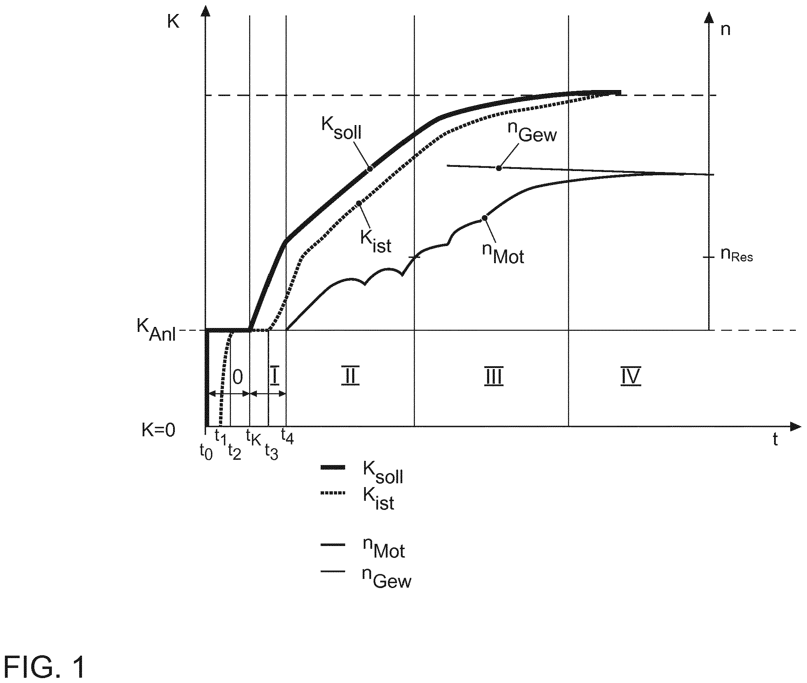

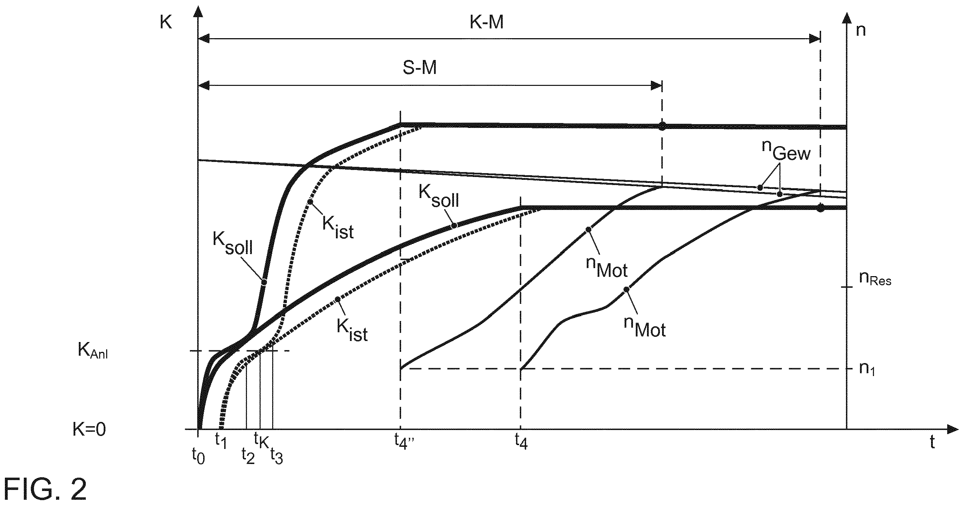

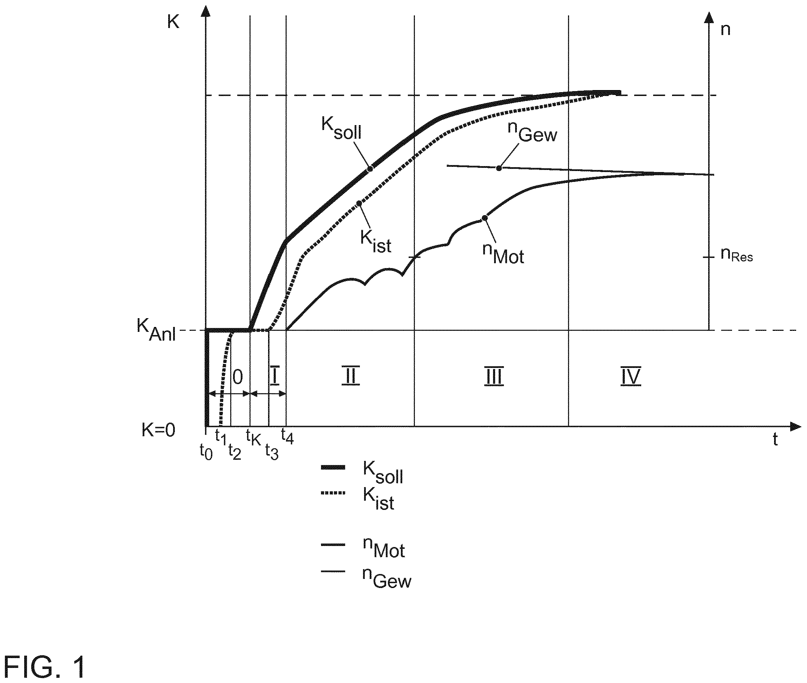

So ist bspw. aus der EP 2 497 940 A1 ein Verfahren zur Steuerung der Kupplung eines Kraftfahrzeuges, von dem die Erfindung ausgeht, bekannt, wo ein Kupplungs-Sollmoment bzw. ein Verlauf eines Kupplungs-Sollmomentes vorgegeben wird und sich daraufhin ein jeweiliges Kupplungs-Istmoment bzw. ein bestimmter Verlauf eines Kupplungs-Istmomentes einstellt, hierzu darf zur weiteren Verdeutlichung an dieser Stelle insbesondere auf die Fig. 1 verwiesen werden, wobei hier die hier beigefügte Fig. 1 das in der EP 2 497 940 A2 realisierte Verfahren näher veranschaulicht (bzw. dieses bekannte Verfahren teilweise in der Fig. 2 der EP 2 497 940 A2 entsprechend dargestellt ist, wobei die hiesige Fig. 1 aber um bestimmte Phasen/Verläufe zur Verdeutlichung dieses im Stand der Technik bekannten Verfahrens entsprechend ergänzt worden ist). Auf der x-Achse der Fig. 1 ist die Zeit t und auf der - linken - y-Achse das Kupplungsmoment M aufgetragen. Der Anlegepunkt der hier bei dem bekannten Steuerungsverfahren sich schließenden Kupplung bzw. das entsprechende Anlegemoment ist durch eine entsprechend gestrichelte Linie dargestellt. Gut zu erkennen sind auch hier unterschiedliche einzelne Phasen der dargestellten Verläufe, nämlich die Phase "0", die Phase "I", die Phase "II", sowie die Phase "III" bzw. die Phase "IV". Weiterhin ist dargestellt der Verlauf des Kupplungs-Sollmomentes Kₛₒₗₗ sowie die des Kupplungs-Istmomentes Kᵢₛₜ, sowie der Verlauf der Motordrehzahl bzw. der Getriebeeingangswellendrehzahl (durch eine dargestellte parallele weitere - rechte - y-Achse). Auf die Legende und die grafischen Verläufe bzw. Darstellungen der Fig. 1 darf nun hier näher eingegangen werden:
Bei dem durch die EP 2 497 940 A2 bekannten Verfahren verläuft das Kupplungs-Sollmoment Kₛₒₗₗ in der Phase "0" im Wesentlichen stufenförmig, nämlich steigt direkt bis zum Anlegepunkt/ Anlegemoment an und verharrt dann bis zum Ende der Phase "0" konstant auf dem Wert des Anlege-Sollmomentes. In der Phase "I" steigt das Kupplungs-Sollmoment linear Kₛₒₗₗ mit einem ersten starken Gradienten, insbesondere steil an, wobei in der Phase "II" das Kupplungs-Sollmoment Kₛₒₗₗ mit einem geringeren zweiten Gradienten ebenfalls linear ansteigt. In der Phase "III" nimmt die Steigung bzw. der Gradient des Kupplungs-Sollmomentes Kₛₒₗₗ stetig ab und weist in der Phase "IV" dann im Wesentlichen einen konstanten Wert auf. Das Kupplungszielmoment in der Phase "IV" entspricht im Wesentlichen dem Schleppmoment des Motors zusammen mit dem Beschleunigungsmoment um die trägen Massen des Motors zu beschleunigen.

Das Kupplungs-Istmoment Kᵢₛₜ folgt "virtuell" in der Phase "0" mit einer gewissen Zeitverzögerung, beginnend beim Zeitpunkt t₁ mit einem ersten starken Gradienten dem Verlauf des Kupplungs-Sollmomentes Kₛₒₗₗ folgend, also steigt nämlich stark in Richtung des Anlegepunktes/ Anlegemomentes steigend an. Während also das Kupplungs-Sollmoment Kₛₒₗₗ sprungförmig bis zum Anlegepunkt der Kupplung aufgebaut wird, folgt das Kupplungs-Istmoment Kᵢₛₜ dem Kupplungs-Sollmoment Kₛₒₗₗ solange bis insbesondere zum Zeitpunkt t₂ das Kupplungs-Istmoment Kᵢₛₜ "real" dann auch das Anlegemoment/ den Anlegepunkt erreicht hat, flacht dann aber stark ab bzw. ist konstant und wird in der Phase "0" nach dem Erreichen des Anlegepunktes/ Anlegemomentes bis zum Zeitpunkt t₃ nicht weiter aufgebaut. Es kommt zu einer "Totzeit" im Momentenaufbau des Kupplungs-Istmomentes Kᵢₛₜ. Dieses kann erst wieder mit einer gewissen Zeitverzögerung dem Kupplungs-Sollmoment Kₛₒₗₗ folgen, nachdem in der Phase "I" dann das Kupplungs-Sollmoment Kₛₒₗₗ wieder linear stetig ansteigt, wobei das Kupplungs-Istmoment Kᵢₛₜ dann dem Verlauf des Kupplungs-Sollmomentes Kₛₒₗₗ ab Mitte der Phase "I", nämlich ab dem Zeitpunkt t₃ bis zum Ende der Phase "III" im Wesentlichen folgt bzw. in der Phase "IV" dann das Kupplungs-Istmoment Kᵢₛₜ den Endwert des vorgegebenen Kupplungs-Sollmomentes Kₛₒₗₗ, nämlich eine entsprechend konstanten Wert dann erreicht, so wie aus der Fig. 1 ersichtlich.

Erst im Zeitpunkt t₄, insbesondere zu Beginn der Phase "II" wird die Ausgangswelle des Verbrennungsmotors "losgebrochen", insbesondere dann, wenn das Kupplungs-Istmoment Kᵢₛₜ die Haftreibung der Ausgangswelle des Verbrennungsmotors übersteigt bzw. überstiegen hat. Die Drehzahl n_{Mot} des Verbrennungsmotors steigt dann über die Phasen "II" bis "IV" an, wobei erst in der Phase "IV" die Drehzahl n_{Mot} des Verbrennungsmotors auch die Drehzahl der Eingangswelle n_{Gew} des Getriebes erreicht. Insbesondere zwischen der Phase "II" und der Phase "III" übersteigt die Motordrehzahl n_{Mot} hier dann die für den ZMS-Resonanzbereich kritische Drehzahl, so wie aus Fig. 1 ersichtlich bzw. schematisch dargestellt. Eine Einspritzung zum Start des Verbrennungsmotors erfolgt gemäß der Fig. 1 frühestens zu Beginn der Phase "III" bzw. insbesondere erst in der Phase "IV".

Wie insbesondere aber aus der Fig. 1 und den obigen Erläuterungen deutlich wird, ist bei dem gemäß der EP 2 497 940 A2 bekannten Verfahren einerseits eine Totzeit, nämlich zwischen den dortigen Zeitpunkten t2 und t3 vorhanden, so dass es zu einer Verzögerung des Startes der Verbrennungsmotors kommt, wobei andererseits die Steigung des Kupplungs-Sollmomentes Kₛₒₗₗ und damit auch des zeitlich nachfolgenden Kupplungs-Istmomentes Kᵢₛₜ, insbesondere zu Beginn der Phase "I" sehr groß ist, so dass es hier dann zu einer starken Aggregateabstützung in den Gummi-Aggregatelagern kommt, was den Komfort für den Fahrer entsprechend mindert bzw. dieser dann als unangenehm empfindet.

Der Erfindung liegt daher die Aufgabe zugrunde, das eingangs genannte Verfahren nun derart auszugestalten und weiterzubilden, dass einerseits eine Verzögerung des Starts des Verbrennungsmotors verringert bzw. vermieden ist, sowie andererseits der Fahrtkomfort erhöht ist.

Die zuvor aufgezeigte Aufgabe ist nun zunächst durch die Merkmale des Patentanspruches 1 gelöst.

Wesentlich ist zunächst, dass der Verlauf des Kupplungs-Sollmomentes so aufgebaut wird, so dass das Kupplungs-Istmoment den Anlegepunkt im Wesentlichen streng monoton steigend durchläuft. Hierdurch wird zunächst eine Totzeit des Kupplungs-Istmomentes, wenn dieses den Anlegepunkt erreicht bzw. diesen durchläuft vermieden. Hierdurch bedingt kann der Start des Verbrennungsmotors - verglichen mit dem bisherigen bekannten Stand der Technik - dann auch schneller erfolgen. Der Verbrennungsmotor kann früher angeschleppt und gestartet werden. Weiterhin ist auch der Fahrkomfort des Kraftfahrzeugs beim Anschleppen des Verbrennungsmotors erhöht, denn das Kupplungs-Istmoment muss nun nicht - wie bisher im Stand der Technik - mehr oder weniger abrupt nach dem Erreichen des Anlegepunktes/ Anlegemomentes erhöht werden, sondern es durchläuft den Anlegepunkt im Wesentlichen nun streng monoton steigend. Hierdurch bedingt müssen sich die Aggregate in den Gummi-Aggregatelagern nicht wie bisher - mehr oder weniger plötzlich - abstützen, sondern es erfolgt eine mehr oder weniger gleitende Abstützung der Aggregate, insbesondere wird das entsprechende Gegenmoment zum Kupplungsmoment auch im Wesentlichen stetig und eben nicht abrupt aufgebaut. Die eingangs genannten Nachteile sind daher vermieden und entsprechende Vorteile sind erzielt.

Bei der bevorzugten Ausführungsform des Verfahrens wird das Kupplungs-Sollmoment aufgebaut, wobei das Kupplungs-Istmoment im Wesentlichen dem Verlauf des Kupplungs-Sollmomentes zeitlich verzögert folgt. Insbesondere verläuft daher auch das Kupplungs-Sollmoment im Anlegepunkt im Wesentlichen streng monoton steigend.

Bis kurz vor dem Erreichen des Anlegepunktes wird das Kupplungs-Istmoment mit einem bestimmten ersten, insbesondere sehr steilen Gradienten aufgebaut, wobei das Kupplungs-Istmoment dann den Anlegepunkt von einem Zeitpunkt kurz vor dem Erreichen des Anlegepunktes bis zu einem Zeitpunkt kurz nach dem Passieren des Anlegepunktes mit einem - verglichen mit dem ersten Gradienten - geringeren bestimmten zweiten Gradienten durchläuft. Da der Verlauf des Kupplungs-Istmomentes dem Verlauf des Kupplungs-Sollmomentes im Wesentlichen folgt, gilt für den Verlauf des Kupplungs-Sollmomentes im Wesentlichen auch das zuvor gesagte. Hierdurch bedingt wird das Kupplungs-Istmoment insbesondere in kurzer Zeit mit Hilfe eines bestimmten steilen (großen) ersten Gradienten aufgebaut, so dass der Anlegepunkt der Kupplung auch nach kurzer Zeit erreicht wird, wobei der Anlegepunkt der Kupplung dann aber mit einem bestimmten flacheren (geringeren) zweiten Gradienten durchlaufen wird, was die zuvor genannten Vorteile mit sich bringt.

Im Wesentlichen weist dann zu einem Zeitpunkt, wo die Haftreibung der Ausgangswelle des Verbrennungsmotors überwunden wird bzw. die Ausgangswelle des Verbrennungsmotors beginnt sich zu drehen, insbesondere also "losgebrochen" wird, und/oder die Ausgangswelle des Verbrennungsmotors eine bestimmte Drehzahl erreicht, der Verlauf des Kupplungs-Istmomentes einen im Wesentlichen - im Vergleich zu dem zweiten Gradienten - bestimmten dritten, insbesondere geringeren Gradienten auf. Dies führt insbesondere dazu, dass ein im Wesentlichen glatter Übergang zu einem konstanten Momentenniveau realisierbar ist, insbesondere nachdem die Ausgangswelle des Verbrennungsmotors "losgebrochen" ist. Während der Realisierung des im Wesentlichen konstanten Momentenniveaus des Kupplungs-Istmomentes steigt die Drehzahl der Ausgangswelle des Verbrennungsmotors stetig an, kann so insbesondere auch den kritischen ZMS-Resonanzbereich durchlaufen. Insbesondere wird die Kraftstoffeinspritzung des Verbrennungsmotors auch erst oberhalb des kritischen ZMS-Resonanzbereiches freigegeben.

Vorzugsweise gibt es einen "Schnell-Modus" und einen "Komfort-Modus", mit dem der Verbrennungsmotor angeschleppt wird.

Im Komfort-Modus wird der Verlauf des Kupplungs-Istmomentes bis zum Erreichen des konstanten Momentenniveaus im Wesentlichen harmonisch graduell abnehmend ausgebildet, wobei der erste Gradient sehr groß, der zweite Gradient geringer als der erste Gradient und der dritte Gradient geringer als der zweite Gradient ausgebildet ist bzw. die jeweiligen daraus resultierenden Steigungen entsprechend realisiert sind. Insbesondere kann der Verlauf des Kupplungs-Istmomentes für den Komfort-Modus als ein Spline aus Polynomen zweiter Ordnung ausgebildet sein.

Der Schnell-Modus bzw. der Verlauf des Kupplungs-Istmomentes im Schnell-Modus ist anders als im Komfort-Modus ausgebildet. Im Schnell-Modus weist der Verlauf des Kupplungs-Istmomentes zum Erreichen des konstanten Momentenniveaus im Wesentlichen zunächst in der Anfangsphase einen zunächst stark steigend ausgebildeten Verlauf auf, da der erste Gradient sehr groß ausgebildet ist. Dann zumindest kurz vor und nach dem Anlegepunkt ist der Verlauf des Kupplungs-Istmomentes wesentlich flacher ausgebildet, da nämlich der zweite Gradient geringer als der erste Gradient ausgebildet ist, wobei nach dem Durchlaufen des Anlegepunktes der Verlauf einen bestimmten Zwischengradienten aufweist, der größer ist als der zweite Gradient, so dass der Verlauf wieder stark ansteigt bevor der Verlauf - in der letzten Phase - im Wesentlichen wieder flacher mit Hilfe des dritten Gradienten realisiert wird bzw. die jeweiligen Steigungen gemäß der jeweiligen Gradienten realisiert sind. Mit dem zuvor genannten "Schnell-Modus" kann der Verbrennungsmotor zeitlich noch früher, also eher gestartet werden als im Komfort-Modus. Der Schnell-Modus wird insbesondere mit Hilfe eines Splines aus Polynomen zweiter Ordnung ausgebildet. Schnell-Modus bzw. Komfort-Modus sind aber auch als Splines aus (stückweise zusammengesetzten) Polynomen erster, zweiter und dritter Ordnung darstellbar bzw. realisierbar.

Es gibt nun eine Vielzahl von Möglichkeiten, das erfindungsgemäße Verfahren in vorteilhafter Art und Weise auszugestalten und weiterzubilden. Hierfür darf zunächst auf die dem Patentanspruch 1 nachgeordneten Patentansprüche verwiesen werden. Im Folgenden dürfen mehrere bevorzugte Ausgestaltungen der Erfindung anhand der Zeichnung und der dazugehörigen Beschreibung näher erläutert werden. In der Zeichnung zeigt:
- Fig. 1: ein im Stand der Technik bekanntes Verfahren zur Steuerung der Kupplung eines Kraftfahrzeuges mit den Darstellungen der Verläufe des KupplungsSollmomentes, des Kupplungs-Istmomentes, sowie der Drehzahl der Ausgangswelle des Verbrennungsmotors bzw. der Drehzahl der Eingangswelle des Getriebes, jeweils in Abhängigkeit der Zeit t bzw. für bestimmte einzelne Phasen in schematischer Darstellung, und
- Fig. 2: das erfindungsgemäße Verfahren, nämlich eine Darstellung ähnlich zu der Darstellung aus Fig. 1, aber mit Verdeutlichung der entsprechenden Unterschiede einerseits für einen Komfort-Modus und andererseits für einen Schnell-Modus in schematischer Darstellung.

Die Fig. 1 zeigt zunächst im Wesentlichen die im Stand der Technik bereits bekannten Verfahrensschritte: Auch hier folgt das Kupplungs-Istmoment Kᵢₛₜ im Wesentlichen dem Kupplungs-Sollmoment Kₛₒₗₗ. Aus der Fig. 1 ist gut ersichtlich, dass, wie bereits eingangs erläutert, im Zeitpunkt t₀ die Kupplung komplett geöffnet ist und der stufenförmige Verlauf des Kupplungs-Sollmomentes Kₛₒₗₗ dazu führt, dass das Kupplungs-Istmoment Kᵢₛₜ dem Kupplungs-Sollmoment Kₛₒₗₗ zeitlich verzögert ab dem Zeitpunkt t₁ folgend, zunächst stark ansteigt und die Kupplung den Anlegepunkt bzw. das Anlegemoment im Zeitpunkt t₂ erreicht. Erst wenn dies der Fall ist nimmt das Kupplungs-Sollmoment Kₛₒₗₗ in der Phase "I" ab dem Zeitpunkt t_{K} wieder zu, so dass dann das Kupplungs-Istmoment Kᵢₛₜ ab dem Zeitpunkt t₃ wiederum dem Kupplungs-Sollmoment Kₛₒₗₗ folgend, ebenfalls ansteigt. Insbesondere wird im Zeitpunkt t₄ die Ausgangswelle des Verbrennungsmotors "losgebrochen" und beginnt sich zu drehen bis bei Durchlauf der Phasen "II" bis "IV" die Drehzahl n_{Mot} der Ausgangswelle des Verbrennungsmotors die Drehzahl n_{Gew} der Eingangswelle des Getriebes erreicht. Hierbei durchläuft das Kupplungs-Istmoment Kᵢₛₜ die Totzeit zwischen den Zeitpunkten t₂ und t₃ also im Wesentlichen eine Totzeit = t₃ - t₂, was dazu führt, dass der Verbrennungsmotor aufgrund der Totzeit entsprechend spät gestartet werden kann sowie es aufgrund des - plötzlichen - starken Anstieges des Kupplungs-Istmomentes Kᵢₛₜ ab dem Zeitpunkt t₃ auch zu den entsprechenden Komforteinbußen aufgrund der abrupten Aggregateverlagerung kommt, wie bereits beschrieben.

Kupplungszielmoment entspricht im Wesentlichen dem Schleppmoment des Motors zusammen mit dem Beschleunigungsmoment um die trägen Massen des Motors zu beschleunigen.

Das Verfahren wird mit Hilfe insbesondere eines elektrischen und/oder elektronischen Steuergerätes realisiert, das einen entsprechenden Microprozessor aufweist, wobei dem Steuergerät die entsprechenden Daten/Werte übermittelt werden bzw. mit dessen Hilfe die Kupplung entsprechend ansteuerbar ist. Die in Fig. 2 dargestellten Kurvenverläufe und/oder die Daten sind daher im Steuergerät entsprechend "abgelegt" und/oder werden dort entsprechend ermittelt.

Die zuvor genannten Nachteile sind nun zunächst dadurch vermieden, dass der Verlauf des Kupplungs-Sollmomentes Kₛₒₗₗ so aufgebaut wird, so dass das Kupplungs-Istmoment Kᵢₛₜ den Anlegepunkt der Kupplung im Wesentlichen streng monoton steigend durchläuft. Dies ist insbesondere in der Fig. 2 gut ersichtlich schematisch dargestellt. Gut ersichtlich in Fig. 2 sind die entsprechenden Verläufe für das Kupplungs-Sollmoment Kₛₒₗₗ für einen Komfort-Modus und für einen Schnell-Modus, sowie das mit einer Zeitverzögerung dem Verlauf des Kupplungs-Sollmomentes Kₛₒₗₗ im Wesentlichen folgende Kupplungs-Istmoment Kᵢₛₜ, ebenfalls für die zuvor genannten Modi, entsprechend dargestellt. Der Anlegepunkt der zu schließenden Kupplung ist im Wesentlichen bestimmt und/oder im Wesentlichen aus einem der letzten Schließvorgänge entsprechend ermitteltet und/oder adaptiert worden, also bekannt bzw. ist ein entsprechendes Anlegemoment entsprechend bestimmt bzw. bekannt. Dadurch, dass das Kupplungs-Istmoment Kᵢₛₜ den Anlegepunkt im Wesentlichen streng monoton steigend durchläuft können die oben beschriebenen Nachteile vermieden werden, insbesondere ist keine Totzeit mehr zwischen den Zeitpunkten t₂ und t₃ realisiert und der Verbrennungsmotor kann früher gestartet bzw. früher angeschleppt werden. Grundsätzlich darf zunächst folgendes ausgeführt werden:
Bis kurz vor dem Erreichen des Anlegepunktes wird das Kupplungs-Istmoment Kᵢₛₜ mit einem bestimmten ersten, insbesondere sehr steilen (großen) Gradienten aufgebaut, insbesondere zwischen den Zeitpunkten t₁ und t₂. Das Kupplungs-Istmoment Kᵢₛₜ durchläuft dann den Anlegepunkt von dem Zeitpunkt t₂ kurz vor dem Erreichen des Anlegepunktes bis zu einem Zeitpunkt t₃ kurz nach dem Passieren des Anlegepunktes mit einem - verglichen mit dem ersten Gradienten - geringerem bestimmten zweiten Gradienten. Anders ausgedrückt, das Kupplungs-Istmoment Kᵢₛₜ verläuft zwischen den Zeitpunkten t₂ und t₃ flacher als zwischen den Zeitpunkten t₁ und t₂. Der Verlauf des Kupplungs-Istmomentes Kᵢₛₜ vom Zeitpunkt t₁ bis t₂ ist hier entsprechend "virtuell" dargestellt, wobei insbesondere ab dem Zeitpunkt t₂ das Kupplungs-Istmoment Kᵢₛₜ, spätestens aber ab dem Zeitpunkt t_{K} real anliegt bzw. realisiert ist. Der Verlauf des Kupplungs-Istmomentes Kᵢₛₜ entspricht dabei einer "glatten" Funktion ohne Momentengradientensprüngen. Der jeweilige Kupplungsmomentengradient [(erster, zweiter, dritter Gradient bzw. ein "Zwischengradient" (für den Schnell-Modus)] wird dabei in Abhängigkeit der einzelnen Phasen des Anschleppvorganges gesteuert/geregelt.

Im Wesentlichen zu einem Zeitpunkt t₄ (t_{4'} bzw. t_{4"}, je nachdem welcher Modus realisiert wird), nämlich wo die Haftreibung der Ausgangswelle des Verbrennungsmotors überwunden wird bzw. die Ausgangswelle des Verbrennungsmotors beginnt sich zu drehen, insbesondere "losgebrochen" wird, und/oder die Ausgangswelle des Verbrennungsmotors eine bestimmte "erste Drehzahl" n_{Mot} erreicht, weist dann der Verlauf des Kupplungs-Istmomentes Kᵢₛₜ einen im Wesentlichen - im Vergleich zu dem zweiten Gradienten - bestimmten dritten, insbesondere sehr flachen (geringen) Gradienten auf. Hierdurch ist insbesondere ein im Wesentlichen glatter Übergang zu einem konstanten Momentenniveau realisierbar, das in der Fig. 2 im Wesentlichen am Ende der jeweiligen Verläufe für das Kupplungs-Istmoment Kᵢₛₜ dargestellt ist.

Anders ausgedrückt, in einem Zeitpunkt t₄ (t_{4'} bzw. t_{4"}, je nachdem welcher Modus realisiert wird, was im Folgenden noch näher erläutert werden wird), wird die Ausgangswelle des Verbrennungsmotors losgebrochen und beginnt sich zu drehen, wobei die Drehzahl n_{Mot} der Ausgangswelle des Verbrennungsmotors dann stetig ansteigt, insbesondere aufgrund des dann realisierten konstanten Momentenniveau des Kupplungs-Istmomentes Kᵢₛₜ. Insbesondere kann dann die Drehzahl n_{Mot} der Ausgangswelle des Verbrennungsmotors den kritischen ZMS-Resonanzbereich (Zweimassenschwungrad-Resonanzbereich) durchlaufen bzw. zumindest übersteigen bevor dann die Kraftstoffeinspritzung des Verbrennungsmotors freigegeben wird. Letztere wird insbesondere erst oberhalb des kritischen ZMS-Resonanzbereiches freigegeben.

Die Fig. 2 zeigt insbesondere auch die Drehzahl n_{Gew} der Eingangswelle des Getriebes, die hier bei zunehmender Zeit t leicht abnimmt, insbesondere weil das Kraftfahrzeug "segelt". Zudem ist die Drehzahl n_{Mot} der Ausgangswelle des angeschleppten Verbrennungsmotors entsprechend dargestellt, insbesondere für beide hier dargestellten Modi, nämlich für einen "Schnell-Modus" und für einen "Komfort-Modus", die im Folgenden nun kurz beschrieben werden dürfen:
Fig. 2 zeigt den "Komfort-Modus", nämlich den Verlauf des Kupplungs-Istmomentes Kᵢₛₜ bis zum Erreichen des konstanten Momentenniveaus, wobei der Verlauf des Kupplungs-Istmomentengradienten im Wesentlichen harmonisch graduell abnehmend ausgebildet ist (jeweilige untere Kurven in Fig. 2). Erst beim Zeitpunkt t_{4'} wird die Ausgangswelle des Verbrennungsmotors "losgebrochen" bzw. erreicht eine bestimmte "erste Drehzahl" n_{Mot}. Bei dem harmonisch graduell abnehmenden Verlauf des Kupplungs-Istmomentes Kᵢₛₜ ist der erste Gradient im Bereich zwischen dem Zeitpunkt t₁ und t₂ sehr groß, der zweite Gradient im Bereich zwischen den Zeitpunkten t₂ und t₃ geringer als der erste Gradient und der dritte Gradient in einer Endphase kurz vor Erreichen des Zeitpunktes t_{4'} leicht geringer als der zweite Gradient ausgebildet bzw. sind die jeweiligen daraus resultierenden Steigungen der Verläufe des Kupplungs-Istmomentes Kᵢₛₜ entsprechend realisiert.

Auch wird in der Fig. 2 ein "Schnell-Modus" für den Start des Verbrennungsmotors gezeigt (jeweilige obere Kurven in Fig. 2). Deutlich ersichtlich ist der Verlauf des Kupplungs-Istmomentes Kᵢₛₜ im Schnell-Modus, wobei bis zu dem Erreichen des konstanten Momentenniveaus im Wesentlichen in der Anfangsphase der Verlauf zunächst stark steigend ausgebildet ist, insbesondere zwischen den Zeitpunkten t₁ und t₂ nämlich der erste Gradient sehr groß ausgeführt ist. Dann zumindest kurz vor und nach dem Anlegepunkt also zwischen den Zeitpunkten t₂ und t₃ ist der Verlauf des Kupplungs-Istmomentes Kᵢₛₜ wesentlich flacher, nämlich der zweite Gradient geringer als der erste Gradient ausgebildet und nach dem Durchlaufen des Anlegepunktes insbesondere ab dem Zeitpunkt t₃ ist der Verlauf des Kupplungs-Istmomentes Kᵢₛₜ mit einem bestimmten Zwischengradienten, der größer ist als der zweite Gradient, wieder steiler, bevor der Verlauf in der Endphase im Wesentlichen flach mit Hilfe eines dritten Gradienten (Gradienten in der Endphase) kurz vor Erreichen des Zeitpunktes t_{4"} realisiert wird bzw. die jeweiligen Steigungen gemäß der jeweiligen Gradienten realisiert sind bzw. werden.

Für Zahlenwerte/ entsprechende Bereiche gelten insbesondere im Wesentlichen die folgenden Werte, die insbesondere auch abhängig sind von der spezifischen Ausführung der Aggregate (Motor, Getriebe) von den spezifischen Aggregatelagern, insbesondere von deren Steifigkeit, und/oder von der jeweiligen spezifischen Fahrzeugmasse.

Im Komfort-Modus beträgt der zweite Gradient im Anlegepunkt (bzw. im Schleifpunkt) also zum Zeitpunkt t_{K} für das Kupplungs-Sollmoment Kᵢₛₜ im Wesentlichen insbesondere 400 Nm/s. Der zweite Gradient liegt daher im Komfort-Modus im Wesentlichen zwischen 300 Nm/s bis 500 Nm/s. Insbesondere im Zeitpunkt t_{K} bei dem ein bestimmtes Anlegemoment/ Schleifmoment von der Kupplung realisiert ist, ist daher der zweite Gradient bzw. der hieraus resultierende Verlauf des Kupplungs-Istmoment Kᵢₛₜ realisiert. Insbesondere wird der zweite Gradient kurz vor dem Erreichen des Anlegepunktes ab dem Zeitpunkt t₂ bis kurz nach dem Passieren des Anlegepunktes, also bis zum Zeitpunkt t₃ realisiert, wobei im Zeitpunkt t₂ insbesondere ein (virtuelles) Kupplungs-Istmoment von im Wesentlichen Kᵢₛₜ = Anlegemoment - 10 Nm und im Zeitpunkt t₃ ein (reales) Kupplungs-Istmoment Kᵢₛₜ = Anlegemoment + 10 Nm realisiert ist. Schließlich ist der dritte Gradient insbesondere auch ähnlich dem zweiten Gradienten ausgebildet, weist insbesondere einen leicht geringeren Wert als 400 Nm/s im Komfort-Modus auf. Allerdings sind verschiedene "Komfort-Modi" realisierbar, bei denen der dritte Gradient, also der jeweilige Gradient in der Endphase vor Erreichen des konstanten Momentenniveaus, also zumindest kurz vor Erreichen des Zeitpunktes t_{4'} dann beispielsweise auch einen Wert von 100 Nm/s aufweisen kann.

Im Schnell-Modus beträgt der zweite Gradient im Anlegepunkt (bzw. im Schleifpunkt) also insbesondere zum Zeitpunkt t_{K} für das Kupplungs-Sollmoment Kᵢₛₜ im Wesentlichen insbesondere 100 Nm/s. Der zweite Gradient liegt daher im Schnell-Modus im Wesentlichen zwischen 50 Nm/s bis 300 Nm/s. Insbesondere im Zeitpunkt t_{K} bei dem ein bestimmtes Anlegemoment/ Schleifmoment von der Kupplung realisiert ist, ist daher der zweite Gradient bzw. der hieraus resultierende Verlauf des Kupplungs-Istmoment Kᵢₛₜ realisiert. Insbesondere wird der zweite Gradient kurz vor dem Erreichen des Anlegepunktes ab dem Zeitpunkt t₂ bis kurz nach dem Passieren des Anlegepunktes, also bis zum Zeitpunkt t₃ realisiert, wobei im Zeitpunkt t₂ insbesondere ein (virtuelles) Kupplungs-Istmoment von im Wesentlichen Kᵢₛₜ = Anlegemoment - 10 Nm und im Zeitpunkt t₃ ein (reales) Kupplungs-Istmoment Kᵢₛₜ = Anlegemoment + 10 Nm realisiert ist. Schließlich ist der Gradient der Endphase des Schnell-Modus (hier auch "dritter Gradient" genannt), insbesondere größer als der zweite Gradient ausgebildet und weist insbesondere einen Wert von 300 Nm/s auf bzw. liegt im Bereich von 100 bis 400 Nm/s. Allerdings ist zur Realisierung eines derartigen Schnell-Modus ein weiterer "Zwischengradient" (zwischen zweitem und drittem Gradienten) vorgesehen, der deutlich steiler als der zweite Gradient ausgebildet ist, insbesondere einen Wert von 750 Nm/s aufweist und insbesondere in einem Bereich von 400 bis 900 Nm/s liegt. Daher steigt der Verlauf des Kupplungs-Istmomentes Kᵢₛₜ im Schnell-Modus erst mit dem ersten Gradienten zwischen den Zeitpunkten t₁ und t₂ stark an, durchläuft mit dem zweiten Gradienten zwischen den Zeitpunkten t₂ und t₃ den Anlegepunkt, steigt wieder aufgrund des Zwischengradienten ab dem Zeitpunkt t₃ stark an bevor der Verlauf dann, realisiert durch den dritten Gradienten, wieder abflacht bevor er das konstante Momentenniveau erreicht, nämlich der dritte Gradient in einer Endphase kurz vor Erreichen des Zeitpunktes t_{4"} realisiert wird.

Insbesondere darf auch darauf hingewiesen werden, dass nach dem Erreichen eines Mindest-Kupplungsmomentes, dies gilt grundsätzlich für den Komfort-Modus sowie für den Schnell-Modus, insbesondere mit Hilfe der Realisierung des jeweiligen dritten Gradienten dann darauf gewartet wird, dass die Drehzahl n_{Mot} der Ausgangswelle eine vorbestimmte Drehzahlschwelle übersteigt, insbesondere "losgebrochen" wird bzw. eine bestimmte "erste Drehzahl" aufweist, wie dies für den Komfort-Modus im Zeitpunkt t_{4'} und für den Schnell-Modus im Zeitpunkt t_{4"} dann geschieht, wie gemäß in Fig. 2 dargestellt.

Im Anlegepunkt der Kupplung, insbesondere zum Zeitpunkt t_{K} weist die Kupplung ein Kupplungsmoment von 0 Nm auf, insbesondere einen Wert der im Bereich von (virtuellen) -5 Nm bis (realen) 5 Nm liegt.

### Bezugszeichenliste

- K: Kupplungsmoment
- Kₛₒₗₗ: Kupplungs-Sollmoment
- Kᵢₛₜ: Kupplungs-Istmoment
- K_{Anl}: Kupplungsanlegemoment
- t₀, t₁, t₂, t₃, t₄: Zeitpunkt
- t₄: Zeitpunkt t₄ für den Komfort-Modus
- t₄: Zeitpunkt t₄ für den Schnell-Modus
- t_{K}: Anlegezeitpunkt der Kupplung
- nₘₒₜ: Motordrehzahl, Drehzahl Ausgangswelle Verbrennungsmotor
- n_{GEW}: Drehzahl Getriebeeingangswelle
- n_{Res}: Resonanzdrehzahl des ZMS
- n₁: erste Drehzahl des Verbrennungsmotors
- K-M: Komfort-Modus
- S-M: Schnell-Modus

## Patentansprüche

1. Verfahren zur Steuerung der Kupplung eines Kraftfahrzeuges, wobei das Kraftfahrzeug einen Verbrennungsmotor, ein Getriebe und eine Kupplung aufweist, wobei die Kupplung zur Übertragung eines Drehmomentes wirksam zwischen dem Verbrennungsmotor und dem Getriebe vorgesehen und/oder angeordnet ist und mit Hilfe der Kupplung eine Ausgangswelle des Verbrennungsmotors mit einer Getriebeeingangswelle des Getriebes zur Übertragung des Drehmomentes koppelbar ist, wobei eine Getriebeausgangswelle mit Antriebsrädern des Kraftfahrzeuges wirksam verbunden und/oder gekoppelt ist und wobei in einem Segelbetrieb des Kraftfahrzeuges, in dem das Kraftfahrzeug mit ausgeschaltetem Verbrennungsmotor und mit zumindest teilweise, insbesondere vollständig geöffneter Kupplung antriebsfrei rollt, der Verbrennungsmotor durch ein Schließen der Kupplung zum Start des Verbrennungsmotors angeschleppt wird, wobei ein Kupplungs-Sollmoment (Kₛₒₗₗ) und/oder ein Verlauf eines Kupplungs-Sollmomentes (Kₛₒₗₗ) vorgegeben wird und sich daraufhin ein jeweiliges Kupplungs-Istmoment (Kᵢₛₜ) und/oder ein Verlauf eines Kupplungs-Istmomentes (Kᵢₛₜ) einstellt, und wobei der Anlegepunkt der zu schließenden Kupplung bestimmt ist und/oder als ein bei einem der letzteren Schließvorgänge entsprechend ermittelter und/oder adaptierter Anlegepunkt bekannt ist, **dadurch gekennzeichnet, dass** der Verlauf des Kupplungs-Sollmomentes (Kₛₒₗₗ) so aufgebaut wird, so dass das Kupplungs-Istmoment (Kᵢₛₜ) den Anlegepunkt streng monoton steigend durchläuft.

2. Verfahren nach Anspruch 1, **dadurch gekennzeichnet, dass** der Verlauf des Kupplungs-Istmomentes (Kᵢₛₜ) mit einer Zeitverzögerung dem Verlauf des Kupplungs-Sollmomentes (Kₛₒₗₗ) folgt.

3. Verfahren nach Anspruch 1 oder 2, **dadurch gekennzeichnet, dass** bis kurz vor dem Erreichen des Anlegepunktes das Kupplungs-Istmoment (Kᵢₛₜ) mit einem bestimmten ersten Gradienten aufgebaut wird, wobei das Kupplungs-Istmoment (Kᵢₛₜ) dann den Anlegepunkt von einem Zeitpunkt (t₂) kurz vor dem Erreichen des Anlegepunktes bis zu einem Zeitpunkt (t₃) kurz nach dem Passieren des Anlegepunktes mit einem -verglichen mit dem ersten Gradienten- geringeren bestimmten zweiten Gradienten durchläuft.

4. Verfahren nach einem der vorstehenden Ansprüche, **dadurch gekennzeichnet, dass** im Wesentlichem zu dem Zeitpunkt (t₄), wo die Haftreibung der Ausgangswelle des Verbrennungsmotors überwunden wird bzw. die Ausgangswelle des Verbrennungsmotors beginnt sich zu drehen und/oder die Ausgangswelle des Verbrennungsmotors eine bestimmte erste Drehzahl (nₘₒₜ) erreicht, dann der Verlauf des Kupplungs-Istmoments (Kᵢₛₜ) einen- im Vergleich zu dem zweiten Gradienten - bestimmten dritten Gradienten aufweist, so dass ein glatter Übergang zu einem konstanten Momentenniveau realisierbar ist.

5. Verfahren nach einem der vorstehenden Ansprüche, **dadurch gekennzeichnet, dass** während der Realisierung des im Wesentlichen konstanten Momentenniveaus des Kupplungs-Istmomentes (Kᵢₛₜ) die Drehzahl (nₘₒₜ) der Ausgangswelle des Verbrennungsmotors stetig ansteigt, nämlich den kritischen ZMS-Resonanzbereich durchläuft.

6. Verfahren nach einem der vorstehenden Ansprüche, **dadurch gekennzeichnet, dass** die Kraftstoffeinspritzung des Verbrennungsmotors erst oberhalb des kritischen ZMS-Resonanzbereichs freigegeben wird.

7. Verfahren nach einem der vorstehenden Ansprüche, **dadurch gekennzeichnet, dass** der Verbrennungsmotor in einem Schnell-Modus angeschleppt wird.

8. Verfahren nach einem der vorstehenden Ansprüche, **dadurch gekennzeichnet, dass** der Verbrennungsmotor in einem Komfort-Modus angeschleppt wird.

9. Verfahren nach einem der vorstehenden Ansprüche, **dadurch gekennzeichnet, dass** im Komfort-Modus der Verlauf des Kupplungs-Istmomentes (Kᵢₛₜ) bis zum Erreichen des konstanten Momentenniveaus harmonisch graduell abnehmend ausgebildet ist, nämlich der erste Gradient sehr groß, der zweite Gradient geringer als der erste Gradient und der dritte Gradient geringer als der zweite Gradient ausgebildet ist bzw. die jeweiligen daraus resultierenden Steigungen entsprechend realisiert sind.

10. Verfahren nach einem der vorstehenden Ansprüche, **dadurch gekennzeichnet, dass** im Schnell-Modus der Verlauf des Kupplungs-Istmomentes (Kᵢₛₜ) bis zum Erreichen des konstanten Momentenniveaus - in der Anfangsphase - zunächst stark steigend ausgebildet ist, nämlich der erste Gradient sehr groß ausgebildet ist, dann zumindest kurz vor und nach dem Anlegepunkt (t₂, t₃) der Verlauf wesentlich flacher, nämlich der zweite Gradient geringer als der erste Gradient ausgebildet ist, und nach dem Durchlaufen des Anlegepunktes der Verlauf mit einem bestimmten Zwischengradienten, der grösser ist als der zweite Gradient, wieder stark ansteigt, bevor der Verlauf -in der Endphase - flach mit Hilfe des dritten Gradienten realisiert wird bzw. die jeweiligen Steigungen gemäß der jeweiligen Gradienten realisiert sind bzw. werden.

## Claims

1. Method for controlling the clutch of a motor vehicle, wherein the motor vehicle has an internal combustion engine, a transmission and a clutch, wherein the clutch is provided and/or arranged effectively for transmitting a torque between the internal combustion engine and the transmission, and an output shaft of the internal combustion engine can be coupled by means of the clutch with a transmission input shaft of the transmission for transmitting the torque, wherein a transmission output shaft is effectively connected and/or coupled with drive wheels of the motor vehicle, and wherein in a coasting mode of the motor vehicle, in which the motor vehicle rolls without being powered with the internal combustion engine switched off and with at least partially, particularly completely open clutch, the internal combustion engine is tow-started by closing the clutch for starting the internal combustion engine, wherein a clutch target torque (Kₛₒₗₗ) and/or a course of a clutch target torque (Kₛₒₗₗ) is pre-specified and resulting in the setting of a respective clutch actual torque (Kᵢₛₜ) and/or a course of a clutch actual torque (Kᵢₛₜ), and wherein the application point of the clutch to be closed is determined and/or an application point determined and/or adapted correspondingly during one of the latter closing processes is known, **characterised in that** the course of the clutch target torque (Kₛₒₗₗ) is configured as such that the clutch actual torque (Kᵢₛₜ) runs through the application point in a strictly monotonically increasing manner.

2. Method according to claim 1, **characterised in that** the course of the clutch actual torque (Kᵢₛₜ) follows the course of the clutch target torque (Kₛₒₗₗ) with a time lag.

3. Method according to claim 1 or 2, **characterised in that** until shortly before reaching the application point the clutch actual torque (Kᵢₛₜ) is formed with a certain first gradient, wherein the clutch actual torque (Kᵢₛₜ) then runs through the application point from a point in time (t₂) shortly before reaching the application point up to a point in time (t₃) shortly after running through the application point with a certain second gradient lower in comparison with the first gradient.

4. Method according to one of the preceding claims, **characterised in that** essentially at the point in time (t₄), where the static friction of the output shaft of the internal combustion engine is compensated or the output shaft of the internal combustion engine starts turning and/or the output shaft of the internal combustion engine reaches a certain first number of revolutions (nₘₒₜ), the course of the clutch actual torque (Kᵢₛₜ) then has a certain third gradient in comparison with the second gradient so that a smooth transition to a constant torque level can be realised.

5. Method according to one of the preceding claims, **characterised in that** during the realisation of the essentially constant torque level of the clutch actual torque (Kᵢₛₜ) the number of revolutions (nₘₒₜ) of the output shaft of the internal combustion motor increases steadily, namely runs through the critical dual-mass flywheel resonance range.

6. Method according to one of the preceding claims, **characterised in that** the fuel injection of the internal combustion engine is released not until above the critical dual-mass flywheel resonance range.

7. Method according to one of the preceding claims, **characterised in that** the internal combustion engine is tow-started in a fast mode.

8. Method according to one of the preceding claims, **characterised in that** the internal combustion engine is tow-started in a comfort mode.

9. Method according to one of the preceding claims, **characterised in that** in the comfort mode the course of the clutch actual torque (Kᵢₛₜ) is configured until reaching the constant torque level in a harmonically gradually decreasing manner, namely the first gradient is formed very large, the second gradient less than the first gradient and the third gradient less than the second gradient or the respective rises resulting therefrom are realised correspondingly.

10. Method according to one of the preceding claims, **characterised in that** in the fast mode the course of the clutch actual torque (Kᵢₛₜ) is formed until reaching the constant torque level - in the initial phase - at first in a severely increasing manner, namely the first gradient is formed very large, then the course is formed at least shortly before and after the application point (t₂, t₃) essentially more level, namely the second gradient is formed less than the first gradient, and after running through the application point the course severely increases again with a certain intermediate gradient that is bigger than the second gradient, before the course - in the end phase - is realised level by means of the third gradient or the respective rises are/will be realised according to the respective gradient.

## Revendications

1. Procédé de commande de l'embrayage d'un véhicule automobile, le véhicule automobile présentant un moteur à combustion interne, une transmission et un embrayage, l'embrayage servant à transmettre un couple étant prévu et/ou agencé de manière opérationnelle entre le moteur à combustion interne et la transmission et, à l'aide de l'embrayage, un arbre de sortie du moteur à combustion interne pouvant être couplé à un arbre d'entrée de transmission de la transmission servant à transmettre le couple, un arbre de sortie de transmission étant relié et/ou couplé de manière opérationnelle aux roues motrices du véhicule automobile et, lors d'une utilisation en planeur du véhicule automobile dans laquelle le véhicule automobile avec le moteur à combustion interne arrêté et avec embrayage ouvert au moins partiellement, en particulier complètement, roule sans entraînement, le moteur à combustion interne étant traîné en fermant l'embrayage pour démarrer le moteur à combustion interne, un couple nominal d'embrayage (Kₛₒₗₗ) et/ou une évolution d'un couple nominal d'embrayage (Kₛₒₗₗ) étant prédéfini et résultant ensuite un couple effectif d'embrayage (Kᵢₛₜ) respectif et/ou une évolution d'un couple effectif d'embrayage (Kᵢₛₜ), et le point d'application de l'embrayage à fermer étant déterminé et/ou étant connu en tant que point d'application détecté et/ou adapté en conséquence lors d'une de ces dernières opérations de fermeture, **caractérisé en ce que** l'évolution du couple nominal d'embrayage (Kₛₒₗₗ) est établie de telle sorte que le couple effectif d'embrayage (Kᵢₛₜ) traverse le point d'application de manière strictement monotone croissante.

2. Procédé selon la revendication 1, **caractérisé en ce que** l'évolution du couple effectif d'embrayage (Kᵢₛₜ) suit l'évolution du couple nominal d'embrayage (Kₛₒₗₗ) avec un retard de temps.

3. Procédé selon la revendication 1 ou 2, **caractérisé en ce que** le couple effectif d'embrayage (Kᵢₛₜ) est établi avec un premier gradient déterminé jusqu'à peu de temps avant d'atteindre le point d'application, le couple effectif d'embrayage (Kᵢₛₜ) traversant ensuite le point d'application à partir d'un instant (t₂) peu de temps avant d'atteindre le point d'application jusqu'à un instant (t₃) peu de temps après avoir passé le point d'application avec un deuxième gradient déterminé inférieur par rapport au premier gradient.

4. Procédé selon l'une des revendications précédentes, **caractérisé en ce que** essentiellement à l'instant (t₄), lorsque le frottement statique de l'arbre de sortie du moteur à combustion interne est dépassé ou que l'arbre de sortie du moteur à combustion interne commence à tourner et/ou l'arbre de sortie du moteur à combustion interne atteint un premier régime déterminé (nₘₒₜ), l'évolution du couple effectif d'embrayage (Kᵢₛₜ) - par rapport au deuxième gradient - présente alors un troisième gradient déterminé, de sorte qu'une transition souple vers un niveau de couple constant puisse être réalisée.

5. Procédé selon l'une des revendications précédentes, **caractérisé en ce que**, lors de la réalisation du niveau de couple essentiellement constant du couple effectif d'embrayage (Kᵢₛₜ), le régime (nₘₒₜ) de l'arbre de sortie du moteur à combustion interne augmente régulièrement, à savoir traverse la plage critique de résonance du volant à deux masses.

6. Procédé selon l'une des revendications précédentes, **caractérisé en ce que** l'injection de carburant du moteur à combustion interne n'est libérée qu'au-dessus de la plage critique de résonance du volant à deux masses.

7. Procédé selon l'une des revendications précédentes, **caractérisé en ce que** le moteur à combustion interne est trainé dans un mode rapide.

8. Procédé selon l'une des revendications précédentes, **caractérisé en ce que** le moteur à combustion interne est trainé dans un mode de confort.

9. Procédé selon l'une des revendications précédentes, **caractérisé en ce que**, dans le mode de confort, l'évolution du couple effectif d'embrayage (Kᵢₛₜ) est conformée harmoniquement en diminuant progressivement jusqu'à atteindre le niveau de couple constant, à savoir que le premier gradient est conformé de manière très grande, le deuxième gradient est conformé de manière inférieure au premier gradient et le troisième gradient est conformé de manière inférieure au deuxième gradient ou les pentes résultantes respectives sont réalisées en conséquence.

10. Procédé selon l'une des revendications précédentes, **caractérisé en ce que**, dans le mode rapide, l'évolution du couple effectif d'embrayage (Kᵢₛₜ) est initialement conformée augmentant fortement jusqu'à atteindre le niveau de couple constant, dans la phase initiale, à savoir que le premier gradient est conformé de manière très grande, ensuite au moins peu de temps avant et après le point d'application (t₂, t₃), l'évolution est conformée essentiellement plus plate, à savoir que le deuxième gradient est conformé de manière inférieure au premier gradient, et après avoir traversé le point d'application l'évolution avec un gradient intermédiaire déterminé, qui est plus grand que le deuxième gradient, augmente à nouveau fortement avant que l'évolution, dans la phase finale, ne soit réalisée de manière plate à l'aide du troisième gradient ou que les pentes respectives sont ou seront réalisées en fonction des gradients respectifs.
